# EUROPEAN PATENT SPECIFICATION

(11) **EP 1 542 420 B1**
(45) Date of publication and mention of the grant of the patent: **11.07.2007**
(21) Application number: 04029192.4
(22) Date of filing: 09.12.2004
(51) Int. Cl.: H04L 27/26, H04B 7/08

(54) **Method and device with adaptive antenna array reception**
Verfahren und Vorrichtung mit adaptiven Gruppenantennenempfang
Procédé et système avec réception à réseau d'antennes adaptatives

(30) Priority: 12.12.2003 JP 2003414834
(43) Date of publication of application: 15.06.2005
(73) Proprietor: Pioneer Corporation, Meguro-ku, Tokyo (JP)
(72) Inventor: Hoshino, Hironobu, Kawagoe Koujou, Kawagoe-shi, Saitama-ken 350-8555 (JP)
(74) Representative: Sajda, Wolf E.

(56) References cited:
- EP-A- 1 294 154
- US-A- 4 499 606
- US-A- 5 548 836
- US-A- 6 141 393
- YE LI: "Pilot-symbol-aided channel estimation for OFDM in wireless systems" VEHICULAR TECHNOLOGY CONFERENCE, 1999 IEEE 49TH HOUSTON, TX, USA 16-20 MAY 1999, PISCATAWAY, NJ, USA,IEEE, US, vol. 2, 16 May 1999 (1999-05-16), pages 1131-1135, XP010342070 ISBN: 0-7803-5565-2

## Description

### BACKGROUND OF THE INVENTION

The present invention relates to a receiver, a receiving method, a reception controlling program, and a recording medium.

In recent years, terrestrial digital broadcasting has adopted orthogonal frequency division multiplexing (OFDM) which is resistant to multipath and fading. To receive this terrestrial digital broadcasting on movable bodies such as a vehicle with stability, some receivers adopt diversity reception techniques for switching a plurality of antennas as appropriate (for example, see Japanese Patent Application Laid-Open No. 2003-143100 and US 4499606).

In the conventional technology described above, however, the diversity operation for switching antennas is performed based on the receptionpower of the entire desiredwave included in the received radio waves. One of the possible problems is that when distortion ascribable to multipath, fading, and the like occurs in the transmission channel and the radio waves are received with degradation at certain frequencies, the results of demodulation can involve errors even if the desired wave has sufficient reception power as a whole.

### SUMMARY OF THE INVENTION

A receiver according to a first aspect of the present invention comprises: a plurality of antennas for receiving a transmission signal; a reception signal outputting unit for outputting a reception signal by using one or more antennas out of the plurality of antennas; a transmission channel distortion estimating unit for estimating distortion of a transmission channel based on the reception signal output from the reception signal outputting unit; a decision unit for deciding whether or not to change a receiving condition of the reception signal outputting unit based on the distortion of the transmission channel estimated by the transmission channel distortion estimating unit; and a control unit for controlling the receiving condition of the reception signal outputting unit if the decision unit decides to change the receiving condition of the reception signal outputting unit based on the distortion of the transmission channel.

A receiving method according to a second aspect of the present invention comprises: a reception signal outputting step of outputting a reception signal by using one or more antennas out of a plurality of antennas for receiving a transmission signal; a transmission channel distortion estimating step of estimating distortion of a transmission channel based on the reception signal output in the reception signal outputting step; a decision step of deciding whether or not to change a receiving condition of the reception signal outputting step based on the distortion of the transmission channel estimated in the transmission channel distortion estimating step; and a control step of controlling the receiving condition of the reception signal outputting step if it is decided in the decision step to change the receiving condition of the reception signal outputting step based on the distortion of the transmission channel.

A reception controlling program according to a third aspect of the present invention is one for controlling a receiver by using a computer, the receiver outputting a reception signal by using one or more antennas out of a plurality of antennas for receiving a transmission signal. The reception controlling program makes the computer estimate distortion of a transmission channel based on the reception signal and control the reception signal based on the distortion of the transmission channel estimated.

Arecordingmediumaccording to a fourth aspect of the invention contains the reception controlling program according to the third aspect.

### BRIEF DESCRIPTION OF THE DRAWINGS

These and other obj ects and advantages of the present invention will become clear from the following description with reference to the accompanying drawings, wherein:
Fig. 1 is a diagram showing an example of arrangement of pilot signals in an OFDM transmission scheme;
Fig. 2 is a diagram showing the frequency characteristic of the pilot signals transmitted from a transmitting side;
Fig. 3 is a block diagram showing the general configuration of a receiver according to a first embodiment;
Fig. 4 is a diagram showing the frequency characteristic of the pilot signals received at a receiving side;
Fig. 5 is a flowchart for explaining the operation of changing the receiving condition according to an example 1;
Fig. 6 is a diagram showing the characteristic of moving averages, taken across frequencies, of the pilot signals received at the receiving side;
Fig. 7 is a flowchart for explaining the operation of changing the receiving condition according to an example 2;
Fig. 8 is a block diagram showing the general configuration of a receiver according to a second embodiment;
Fig. 9 is a diagram showing an example of the SP impulse response characteristic of transmission signals received; and
Fig. 10 is a flowchart for explaining the operation of changing the receiving condition according to an example 3.

### DETAILED DESCRIPTION OF THE PREFERRED EMBODIMENTS

Hereinafter, preferred embodiments of the receiver, the receiving method, the reception controlling program, and the recording medium according to the present invention will be described in detail with reference to the accompanying drawings.

One of the objects of these embodiments is to make it possible to select an optimum receiving condition all the time.

The receiving condition depends on antennas in the case of an antenna switching method, and depends on phase differences or levels in the case of a phase difference feeding method. As employed in the following description of the embodiments, "changing the receiving condition" shall refer to changing the state (such as a level and a delay) of the reception signal by such means as switching the antennas and adjusting the phases or levels.

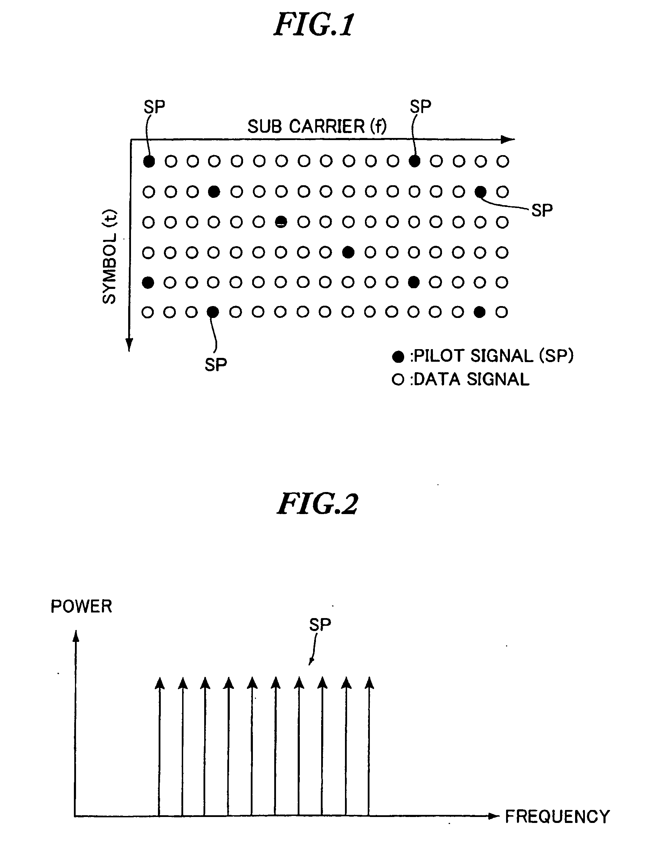

Initially, description will be given in detail of the digital broadcasting which is used for the receiver and the receiving method of this invention. Fig. 1 is a diagram showing an example of arrangement of pilot signals in an OFDM transmission scheme.

In Fig. 1, the y-axis indicates the symbol (equivalent to time t), and the x-axis the sub carrier (equivalent to frequency f). In the OFDM transmission scheme for use in terrestrial digital broadcasting and the like, the transmitting side inserts pilot signals (SP: Scattered Pilot) having a known amplitude and phase into a series of data signals of the transmission signal regularly in advance, at predetermined positions on the frequency axis and the time axis. In Fig. 1, the black circles **"•"** represent the pilot signals SP, and the white circles "o" the data signals.

Fig. 2 is a diagram showing the frequency characteristic of the pilot signals for the transmitting side to transmit. In Fig. 2, the y-axis indicates the power, and the x-axis the frequency. When the transmission channel has an ideal characteristic, i.e., the transmission channel is distortion-free, the frequency-specific powers of the pilot signals SP at the receiving side are also uniform, as in Fig. 2.

### (First Embodiment)

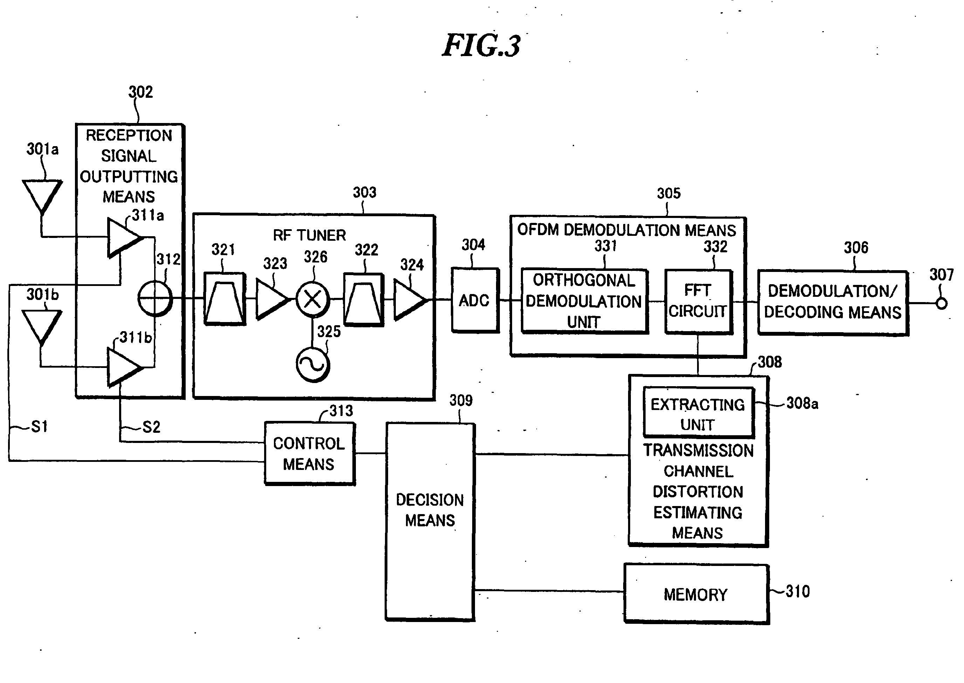

Now, a first embodiment of this invention will be described. Fig. 3 is a block diagram showing the general configuration of a receiver according to the first embodiment.

The transmission signal under the OFDM transmission scheme is received by a plurality of antennas 301a and 301b. For diversity reception, the number of antennas is at least two. Reception signal outputting means 302 selects the transmission signal received by the antenna 301a or 301b which is selected based on select signals S1 and S2 of decision mean 309, and outputs the same to an RF tuner 303. This reception signal outputting means 302 comprises AGC amplifiers 311a and 311b, and an adding unit 312. The gain of the AGC amplifier 311a or 311b which is provided for the antenna 301a or 301b unselected by the select signals S1 and S2 is lowered to interrupt the input, or to decrease the proportion in the combining ratio of the transmission signals in the adding unit 312. The reception signal output means 302 is not limited to the configuration of combining the transmission signals thus by using the phase difference feeding method, but may be of antenna switching method in which the AGC amplifiers 311a and 311b are switched to select either one of the antennas 301a and 301b. For convenience's sake, the following description will deal with the configuration of the antenna switching method in which the antennas 301a and 301b are switched selectively based on the select signals S1 and S2.

The RF tuner 303 includes filters 321 and 322, variable gain amplifiers 323 and 324, an oscillator 325, and a mixer 326. This RF tuner 303 tunes to the OFDM signal of the desired wave out of the transmission signals selected by the reception signal output means 302, converts it into an OFDM signal of intermediate frequency by using the mixer 326, and outputs the resultant to an ADC 304.

The ADC 304 applies analog-to-digital conversion to the transmission signal of intermediate frequency output from the RF tuner 303, and outputs the resultant to OFDM demodulation means 305. The OFDM demodulation means 305 comprises an orthogonal demodulation unit 331 and an FFT circuit 332. The orthogonal demodulation unit 331 converts the digitalized transmission signal into a baseband signal (complex baseband OFDM signal). The FFT circuit 322 receives the baseband signal, extracts signals included in a predetermined FFT window period, and performs FFT (Fast Fourier Transform) to convert the signals into ones on the frequency axis. Consequently, demodulated-wave symbol signals can be obtained from a plurality of respective orthogonal frequency signals constituting the OFDM signal. Demodulation/decoding means 306 demodulates these modulated-wave symbol signals into symbol data, and then decodes the data for reproduction and outputs the resultant through an output terminal 307.

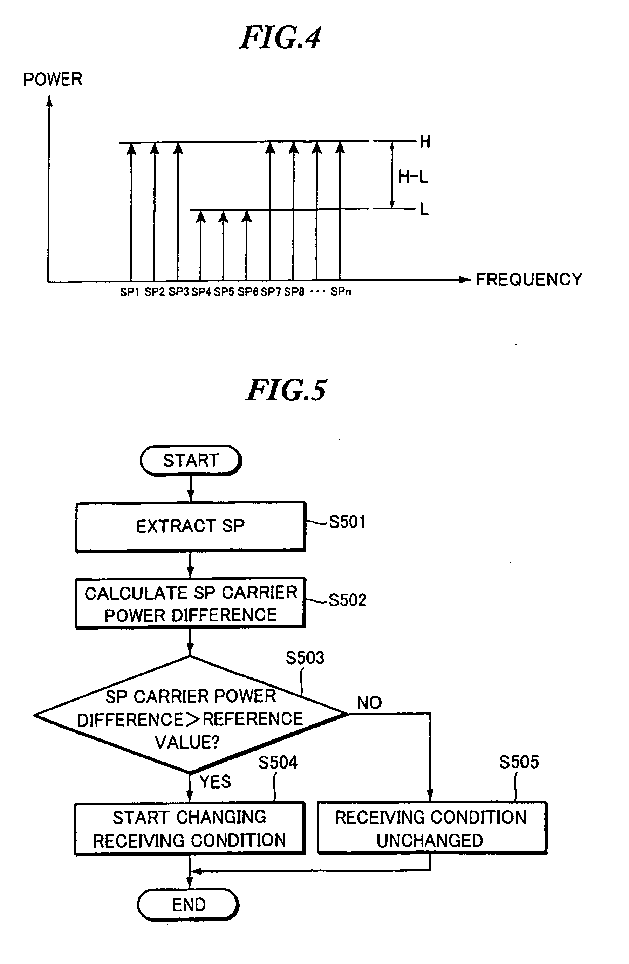

Transmission channel distortion estimating means 308 has an extracting unit 308a for extracting pilot signals. The extracting unit 308a extracts pilot signals SP from the signal (carrier) demodulated by the OFDM demodulation means 305. The transmission channel distortion estimating means 308 estimates the distortion of the transmission channel from the extracted pilot signals. The pilot signals exhibit the frequency characteristic as shown in Fig. 4.

Fig. 4 is a diagram showing the frequency characteristic of the pilot signals received at the receiving side. The y- and x-axes of Fig. 4 are the same as those of Fig. 2, and description thereof will be omitted. When multipath, fading, or other distortion occurs in the transmission channel, the frequency-specific powers of the pilot signals SP become uneven as shown in Fig. 4, causing such phenomena that pilot signals SP at some frequencies drop in power.

The decision means 309 compares the pilot signals SP extracted by the transmission channel distortion estimating means 308 and a reference value for comparison stored in a memory 310, and outputs the result of comparison to control means 313. The control means 313 exercises control for changing the receiving condition based on the result of comparison. Specifically, the control means 313 operates the reception signal outputting means 302 to switch to either one of the antennas 301a and 301b selectively. This makes it possible to conduct reception by using the antenna 301a or 301b which is in an optimum state of reception.

The memory 310 contains various information concerning the receiver, such as the reference value for comparison and the information on the extracted pilot signals (amplitudes and phases) .

Next, the changing of the receiving condition in the foregoing configuration will be described in conjunction with examples.

### [Example 1]

The memory 310 according to an example 1 contains a reference value for an SP carrier power difference of the pilot signals SP to be compared with. This SP carrier power difference is the differential power H - L between the pilot signals H of higher power and the pilot signals L of lower power among the pilot signals SP of the respective frequencies shown in Fig. 4. In the shown example, the group of pilot signals H of higher power include SP1-SP3 and SP7-SPn. The group of pilot signals L of lower power include SP4-SP6.

The decision means 309 compares the differences between the frequency-specific powers of the pilot signals extracted by the transmission channel distortion estimating means 308 and the reference value stored in the memory 310. If the differences between the frequency-specific powers of the pilot signals exceed the reference value, or threshold, the resulting decision to switch the antennas 301a and 301b selectively is output to the control means 313. The control means 313 then operates to change the receiving condition. Specifically, given that the power difference, or reference value, set in the memory 310 is 20 dB, the decision means 309 outputs the resulting decision to start the operation of changing the receiving condition to the control means 313 when the differential power H - L is greater than or equal to the threshold value, or the power difference of 20 dB.

Fig. 5 is a flowchart for explaining the operation of changing the receiving condition according to the example 1. When a transmission signal is received, the individual components shown in Fig. 3 perform signal processing on this transmission signal. A signal is thus demodulated by the FFT circuit 332 of the OFDM demodulation means 305. The extracting unit 308a extracts pilot signals SP from the signal demodulated by the OFDM demodulation means 305 (step S501).

Here, the transmission channel distortion estimating means 308 calculates the SP carrier power difference H - L of the pilot signals described with reference to Fig. 4, based on the pilot signals extracted by the extracting unit 308a (step S502) . The SP carrier power difference H-Lis the differential power between the pilot signals H of higher power and the pilot signals L of lower power among the pilot signals SP of respective frequencies. For a specific method of calculation, the power of a pilot signal H having the highest power and that of a pilot signal L having the lowest power may be compared across the frequencies. Alternatively, the power average of a plurality of pilot signals H in a predetermined range of highest powers and that of a plurality of pilot signals L in a predetermined range of lowest powers may be compared across the frequencies.

In another-method of calculation, moving averages are obtained for a plurality of pilot signals SP of adjoining frequencies, and the SP carrier power difference H - L is calculated from the moving averages.

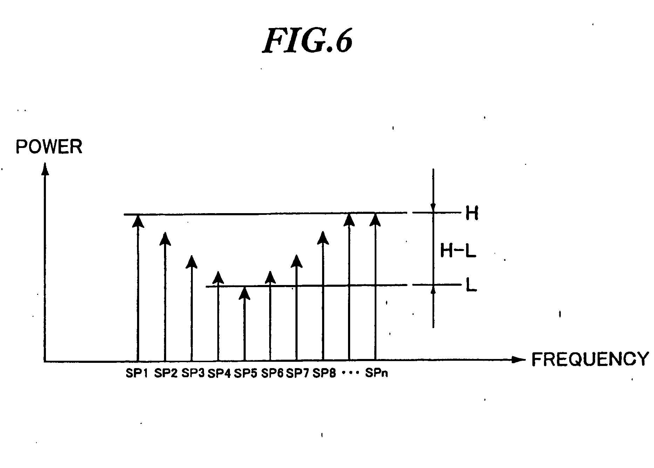

Fig. 6 is a diagram showing the characteristic of moving averages, taken across frequencies, of the pilot signals received at the receiving side. The y- and x-axes of Fig. 6 are the same as those of Fig. 2, and description thereof will be omitted. When multipath, fading, or other distortion occurs in the transmission channel, the frequency-specificpowers of the pilot signals SP become uneven, causing such phenomena that pilot signals SP at some frequencies drop in power as shown in Fig. 4 seen above. Taking the moving averages of the powers taken across frequencies in the state of Fig. 4 results in the state of Fig. 6.

Description will now be given in the concrete of the processing of calculating the moving averages of the powers across frequencies. Suppose, for example, that the number of adjoining signals is four (i = 4). The sum of the powers of the four pilot signals SP1 to SP4 shown in Fig. 4 is divided by the number of signals, or 4, and the result is regarded as the power of the pilot signal SP1 shown in Fig. 6. Similarly, the sum of the powers of the four pilot signals SP2 to SP5 shown in Fig. 4 is divided by the number of signals, or 4, and the result is regarded as the power of the pilot signal SP 2 shown in Fig. 6. In this way, the values for the respective pilot signals SP1 to SPn are calculated. Fig. 6 shows the powers of the respective pilot signals SP after the calculation. In this state, the SP carrier power difference H - L is determined.

Returning to Fig. 5, the decision means 309 compares the SP carrier power difference H - L determined as described above and the reference value (step S503) . If the result of comparison shows that the SP carrier power difference H - L is greater than the reference value (step S503: Yes) , it is determined that the operation of changing the receiving condition is required since the SP carrier power difference H - L shows a large difference in power. The changing of the receiving condition is thus started (step S504 ) . Consequently, the control means 313 outputs the select signals S1 and S2 for switching the antenna selected so far to the other antenna (see Fig. 3). The reception signal outputting means 302, if it has selected the antenna 301 so far, selects the other antenna 301b.

Now, if the SP carrier power difference H - L is smaller than the reference value (step S503: No), it is determined that the operation of changing the receiving condition is unnecessary since the SP carrier power difference H - L shows a small difference in power. The receiving condition is thus kept as is (unchanged) , and the operation is ended (step S505).

The operation of changing the receiving condition shown in the foregoing steps S501 to 505 is performed at timing in minimum units of a single symbol, or a plurality of symbols. This timing of the operation of changing the receiving condition may be set depending on the receiving situation. For example, based on the modulation methods of the receiver and other information, the number of symbols for use in calculating the SP carrier power difference at step S502 may be changed dynamically (with a lapse of time) so that the operation of changing the receiving condition is performed in units of the number of symbols after this dynamic change. Incidentally, the description that the receiving condition is kept as is at step S505 means that the antenna switching processing is not performed and the antenna selected so far is kept selected.

According to the example 1 described above, the operation of changing the receiving condition can be effected by brief processing of simple comparison alone, using the SP carrier power difference of the transmission signals for comparison. This allows the stabilization of the state of reception.

In a modification of this example 1, the transmission channel distortion estimating means 308 estimates the distortion of the transmission channel based on phase differences between a plurality of pilot signals. More specifically, the transmission channel distortion estimating means 308 calculates phase differences from a plurality of pilot signals extracted by the extracting unit 308a, and the decision unit 309 compares the phase differences and a reference value previously stored in the memory 310 to determine whether or not to perform the operation of changing the receiving condition. For example, if adjoining pilot signals have a phase difference greater than or equal to the reference value, the operation of changing the receiving condition is performed. As with the power differences, the phase differences can thus be used as the condition for performing the operation of changing the receiving condition.

### [Example 2]

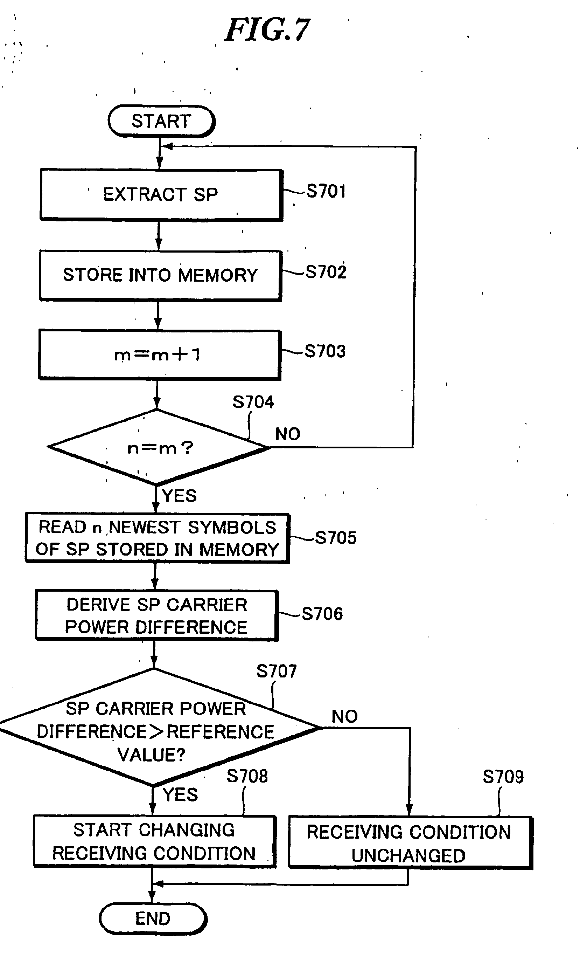

An example 2 provides a configuration in which the processing of the example 1 described above is performed in units of a plurality of symbols. Fig. 7 is a flowchart for explaining the operation of changing the receiving condition according to the example 2. As employed in the processing shown in Fig. 7, the parameter n represents the number of symbols of the pilot signals SP to be used for deciding on the operation of changing the receiving condition. The parameter m represents the number of symbols of the pilot signals SP stored in the memory 310. This m has an initial value of zero.

When a transmission signal is received, the individual components shown in Fig. 3 perform signal processing on this transmission signal. A signal is thus demodulated by the FFT circuit 332 of the OFDM demodulation means 305. The extracting unit 308a extracts a pilot signal SP from the signal demodulated by the OFDM demodulationmeans 305 (step S701) . Next, the extractedpilot signal SP is stored into the memory 310 (step S702). By this storage, the value of m is incremented by one (step S703).

Then, it is determined if the number n of symbols of the pilot signals SP to be used for deciding on the operation of changing the receiving condition coincides with the number m of symbols stored in the memory 310 (n = m) (step S704). If the number m of symbols stored in the memory 310 is yet to reach the number n of symbols of the pilot signals to be used for deciding on the operation of changing the receiving condition (step S704: No), the processing returns to step S701 for repetition.

If the number m of symbols stored in the memory 310 coincides with the number n of symbols of the pilot signals SP to be used for deciding on the operation of changing the receiving condition (n = m) (step S704: Yes), the n symbols of pilot signals SP stored in the memory 310 are read successively in descending order of time of storage (step S705). Here, the transmission channel distortion estimating means 308 derives the SP carrier power difference H - L of the pilot signals SP, described with reference to Fig. 4 (step S706). As mentioned previously, the SP carrier power difference H - L can be calculated by using various specific techniques.

Next, the decision means 309 compares the SP carrier power difference H - L determined as described above and the reference value (step S707). If the result of comparison shows that the SP carrier power difference H - L is greater than the reference value (step S707: Yes), it is determined that the operation of changing the receiving condition is required since the SP carrier power difference H - L itself shows a large difference in power. The operation of changing the receiving condition is thus started (step S708), and the single round of processing is ended. Consequently, the decision means 309 outputs the select signals S1 and S2 for switching the antenna selected so far to the other antenna (see Fig. 3) . Specifically, if the antenna 301 has been selected so far, the other antenna 301b is selected.

Now, if the SP carrier power difference H - L is smaller than the reference value (step S707: No), it is determined that the operation of changing the receiving condition is unnecessary since the SP carrier power difference H - L shows a small difference in power. The receiving condition is thus kept as is (unchanged) (step S709), and the single round of processing is ended. The operation of changing the receiving condition can be started and ended at timing in units of a single symbol or a plurality of symbols after the transmission signals as many as the number n of symbols in use are received.

Note that the processing described above is not restrictive. At step S706, SP carrier power differences H - L for a plurality of symbols may be calculated and stored into the memory. In this configuration, the SP carrier power differences H- L for the plurality of symbols stored in the memory are averaged and used for comparison.

According to the configuration of the example 2 described above, whether or not to change the receiving condition is controlled by using the plurality of symbols of pilot signals SP. It is therefore possible to perform the antenna switching with stability even when the SP carrier power difference varies symbol by symbol.

In possible configurations of the first embodiment, the power of the transmission signal may be detected based on any of the RF signal from the RF tuner 303, the IF signal past the mixer 326, and the baseband signal past the filter 322. In another possible configuration, the detection may be based on the digital signal past the ADC 304.

According to the first embodiment described above, even when the receiving situation varies to make the frequency-specific powers of the pilot signals SP uneven so that the powers of the pilot signals SP drop at some frequencies, the frequency-specific SP carrier power differences can be used to determine whether or not to perform the operation of changing the receiving condition. This can provide the effect of stabilizing the state of reception.

### (Second Embodiment)

Next, description will be given of a second embodiment of this invention. While the first embodiment is configured to use the SP carrier power differences for comparison, the second embodiment is configured to use SP impulse responses of the pilot signals SP for comparison.

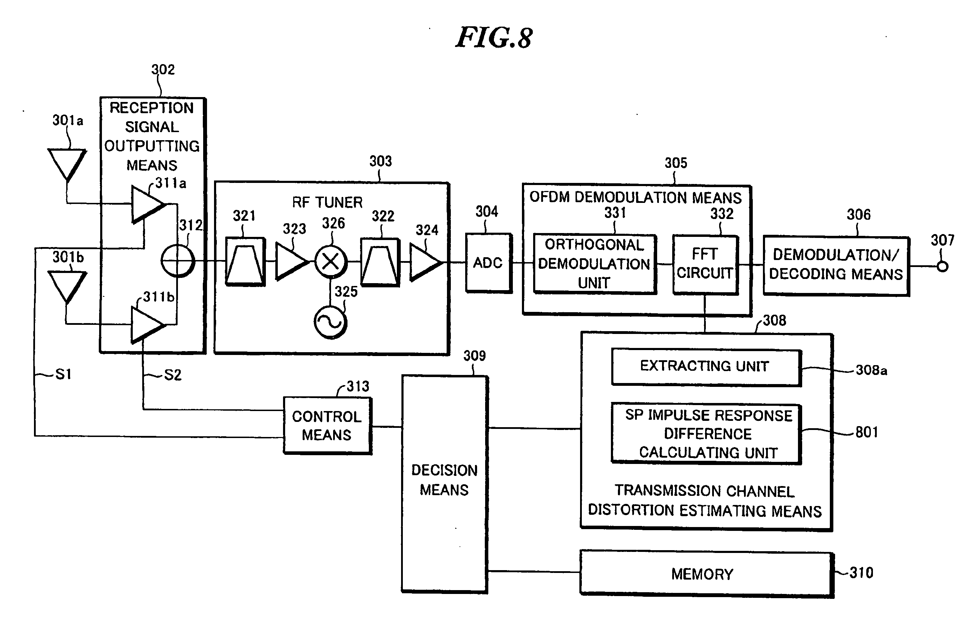

Fig. 8 is a block diagram showing the general configuration of a receiver according to the second embodiment. In Fig. 8, the same components as those of Fig. 3 described in the first embodiment will be designated by identical numerals, and description thereof will be omitted. The configuration of Fig. 8 differs from that of Fig. 3 in that the transmission channel distortion estimating means 308 is provided with an SP impulse response difference calculating unit 801.

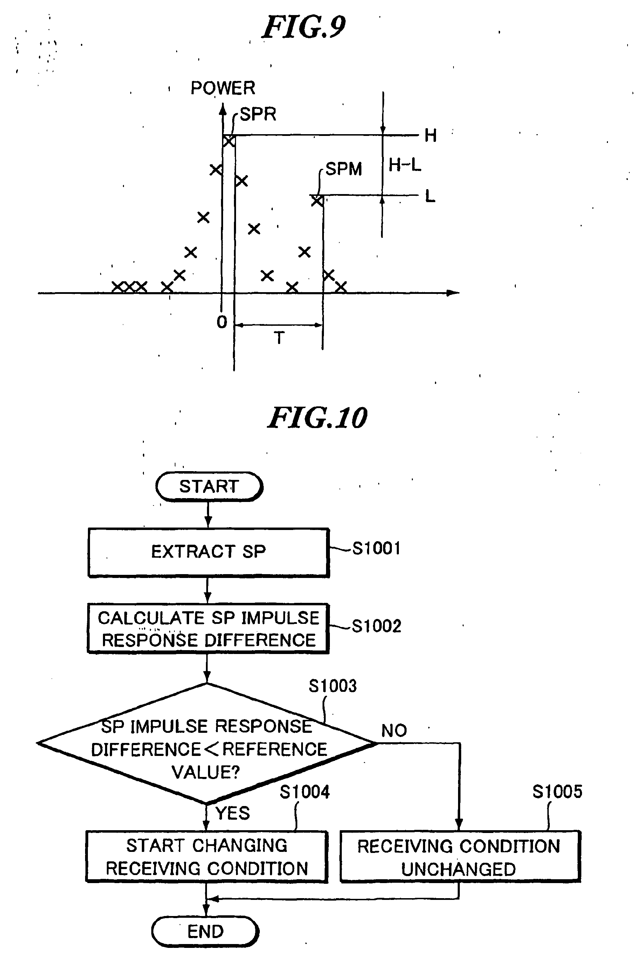

The SP impulse response difference calculating unit 801 is formed by subjecting the pilot signal SP obtained by the FFT circuit 332 of the OFDM demodulation means 305 to additional FFT (Fast Fourier Transform) . Fig. 9 is a diagram showing an example of the SP impulse response characteristic of a received transmission signal. In Fig. 9, the y-axis represents the power, and the x-axis the time. The characteristics of the pilot signals at the frequencies shown in Fig. 4 seen above are represented by respective crosses. Given an ideal distortion-free transmission channel, the powers of the SP impulse responses would concentrate at time 0, with no delay or lead in time.

Nevertheless, when distortion occurs in the transmission channel and causes the state that the powers of the pilot signals SP drop at some frequencies as shown in Fig. 4, the pilot signals SP exhibit the characteristic that they are also distributed over the leading side and trailing side of the time axis, aside from the pilot signal SPR falling on the area of time 0. In particular, the pilot signal SPM shown in Fig. 9 appears due to multipath distortion of T in delay time. If the multipath wave SPM has high power with respect to the desired wave of the pilot signal SP, or SPR, it interferes with the desired wave to contribute a degraded state of reception. For this reason, the operation of changing the receiving condition shall be performed when the difference H - L between the power H of the desired wave of the pilot signal SP, or SPR, and the power L of the multipath or other interference wave SPM falls to or below a certain value.

The memory 310 shown in Fig. 8 contains a reference value (threshold) for an SP impulse response difference of the pilot signals SP to be comparedwith. The decisionmeans 309 shown in Fig. 8 compares the SP impulse response difference of the pilot signals calculated by the SP impulse response difference calculating unit 801 and the reference value stored in the memory 310. Then, the operation of changing the receiving condition through selective switching of the antennas 301a and 301b is performed when the SP impulse response difference between a plurality of pilot signals is smaller than the reference value.

Next, description will be given of an example of the operation of changing the receiving condition according to the foregoing configuration. The following example will deal chiefly with the reference value stored in the memory 310 and examples of operation of the decision means 309 which makes comparing operations using the reference value.

### [Example 3]

Fig. 10 is a flowchart for explaining the operation of changing the receiving condition according to the example 3. When a transmission signal is received, the individual components shown in Fig. 8 perform signal processing on this transmission signal. A signal is thus demodulated by the FFT circuit 332 of the OFDM demodulation means 305. The extracting unit 308a extracts pilot signals SP from the signal demodulated by the OFDM demodulation means 305 (step S1001).

The SP impulse response difference calculating unit 801 calculates the SP impulse responses of a plurality of pilot signals extracted by the extracting unit 308a. Then, as shown in Fig. 9, the SP impulse response difference calculating unit 801 calculates the difference H - L between the power H of the desired wave SPR at time 0 and the power L of the multipath or other interference wave SPM having the second highest power (step S1002).

Next, the decision means 309 compares the SP impulse response difference H - L determined as described above and the reference value (step S1003). If the result of comparison shows that the calculated SP impulse response difference H - L is smaller than the SP impulse response difference shown by the reference value (step S1003: Yes), it is determined that the SP impulse response of the interference wave SPM is high in power, requiring the operation of changing the receiving condition. The operation of changing the receiving condition is thus started (step S1004). Consequently, the decision means 309 outputs the select signals S1 and S2 for switching the antenna selected so far to the other antenna (see Fig. 8). Specifically, if the antenna 301 has been selected so far, the other antenna 301b is selected. On the other hand, if the calculated SP impulse response difference H - L is greater than the SP impulse response difference shown by the reference value (step S1003: No), it is determined that the SP impulse response of the interference wave SPM is low in power, not requiring the operation of changing the receiving condition. The processing is thus ended with the receiving condition unchanged (step S1005). Each of the processes of the foregoing steps S1001 to S1005 is performed in minimum units of a single symbol, or a plurality of symbols.

According to the example 3 described above, the operation of changing the receiving condition can be effected by brief processing of simply comparing the SP impulse response difference of the transmission signals by using the reference value. This allows the stabilization of the state of reception.

According to the second embodiment described above, even when the receiving situation varies to make the frequency-specific powers of the pilot signals SP uneven so that the powers of the pilot signals SP drop at some frequencies, the frequency-specific SP impulse response differences can be used to determine whether or not to perform the operation of changing the receiving condition. This can provide the effect of stabilizing the state of reception.

Note that the foregoing embodiments have dealt with the method of estimating distortion of the transmission channel based on a power difference or phase difference of pilot signals SP or an impulse response difference of pilot signals. The method of estimating distortion of the transmission channel is not limited thereto, however. For example, in QPSK and other modulation methods with on amplitude variation, FFT may be performed in units of a single symbol. Here, the powers of the respective carriers are determined to derive the frequency characteristic, and the distortion of the transmission channel is estimated based on the frequency characteristic. In this way, the distortion of the transmission channel can be estimated by deriving the frequency characteristic of the transmission channel from information on transmission signals other than pilot signals SP.

The embodiments have dealt with the configuration of receiving transmission signals of OFDM transmission scheme. The transmission signals to be received are not limited thereto, however. As long as the modulation method uses a wide range of frequencies, the operation of changing the receiving condition can be performed with stability in response to degradations in the frequency-specific powers of the received transmission signal or the occurrence of multipath and other interference waves, as in the foregoing embodiments.

In the foregoing embodiments, single-tuner diversity receivers have been described as the concrete examples. Nevertheless, the present invention is also applicable to two-tuner diversity receivers which have two tuners and combine the outputs of the plurality of tuners, and receivers which have more tuners.

The receivers described in the embodiments can be controlled through the execution of a reception controlling program prepared in advance on a computer such as a personal computer. This program is recorded on a computer-readable recording medium such as a hard disk, flexible disk, CD-ROM, MO, and DVD, and is read by the computer from the recording medium for execution. This program may also be on a transmission medium capable of distribution over a network such as the Internet.

As has been described, the receiver, the receiving method, the reception controlling program, and the recording medium according to the embodiments are applicable to the field of application of broadcasting and communication, and can be applied to radios, television sets, and navigation systems implementing the same, as well as wide-band radio and the like. Stable reception quality can be provided with such applications as vehicle-mounted (such as car, train, and ship) or portable receivers in particular.

## Claims

1. A receiver comprising:
- a plurality of antennas (301a, 301b) for receiving a transmission signal;
- reception signal outputting means (302) for outputting a reception signal by using one or more antennas out of the plurality of antennas (301a, 301 b);
- transmission channel distortion estimating means (308) for estimating distortion of a transmission channel based on the reception signal output from the reception signal outputting means (302);
- decision means (309) for deciding whether or not to change a receiving condition of the reception signal outputting means (302) based on the distortion of the transmission channel estimated by the transmission channel distortion estimating means (308); and
- control means (313) for controlling the receiving condition of the reception signal outputting means (302) if the decision means (309) decides to change the receiving condition of the reception signal outputting means based on the distortion of the transmission channel,
**characterized in that** the transmission channel distortion estimating means (308) measure the powers of parts of the signal after it has been demodulated in a demodulation means (305), and utilize this to estimate the distortion in the transmission channel.

2. The receiver according to claim 1,
further **characterized by** extracting means (308a) for extracting a plurality of pilot signals (SP) included in the reception signal output from the reception signal outputting means (302), wherein the transmission channel distortion estimating means (308) estimate the distortion of the transmission channel based on the plurality of pilot signals (SP) extracted by the extracting means (308a).

3. The receiver according to claim 2,
**characterized in that** the transmission channel distortion estimating means (308) estimate the distortion of the transmission channel based on a power difference between the plurality of pilot signals (SP) extracted.

4. The receiver according to claim 2,
**characterized in that** the transmission channel distortion estimating means (308) estimate the distortion of the transmission channel based on a phase difference between the plurality of pilot signals (SP).

5. The receiver according to claim 2,
**characterized in that** the transmission channel distortion estimating means (308) estimate the distortion of the transmission channel based on an impulse response difference between the plurality of pilot signals (SP).

6. The receiver according to any of claims 3 to 5,
**characterized in that** the decision means (309) decide whether or not to change the receiving condition of the reception signal outputting means (302) by comparing the power difference, the phase difference, or the impulse response difference with a reference value.

7. A receiving method comprising:
- a reception signal outputting step of outputting a reception signal by using one or more antennas out of a plurality of antennas (301 a, 301b) for receiving a transmission signal;
- a transmission channel distortion estimating step of estimating distortion of a transmission channel based on the reception signal output in the reception signal outputting step;
- a decision step of deciding whether or not to change a receiving condition of the reception signal outputting step based on the distortion of the transmission channel estimated in the transmission channel distortion estimating step; and
- a control step of controlling the receiving condition of the reception signal outputting step if it is decided in the decision step to change the receiving condition of the reception signal outputting step based on the distortion of the transmission channel,
**characterized by** the transmission channel distortion estimating step measure the powers of parts of the signal after it has been demodulated in a demodulation means, and utilize this to estimate the distortion in the transmission channel.

8. A reception controlling program for controlling a receiver by using a computer, the receiver outputting a reception signal by using one or more antennas out of a plurality of antennas (301a, 301b) for receiving a transmission signal, wherein the reception controlling program makes the computer estimate distortion of a transmission channel based on the reception signal and control the reception signal based on the distortion of the transmission channel estimated,
**characterized in that** the transmission channel distortion estimation step measures the powers of parts of the signal after it has been demodulated, and utilizes this to estimate the distortion in the transmission channel.

9. A computer readable storage medium storing a reception controlling program as set forth in claim 8.

## Patentansprüche

1. Empfänger, der folgendes aufweist:
- eine Vielzahl von Antennen (301a, 301b) zum Empfangen eines Sendesignals;
- eine Empfangssignal-Abgabeeinrichtung (302) zum Abgeben eines Empfangssignals unter Verwendung von einer oder mehreren Antennen aus der Vielzahl der Antennen (301a, 301b);
- eine Übertragungskanalverzerrungs-Schätzeinrichtung (308) zum Abschätzen der Verzerrung eines Übertragungskanals auf der Basis des von der Empfangssignal-Abgabeeinrichtung (302) abgegebenen Empfangssignals;
- eine Entscheidungseinrichtung (309) zum Entscheiden, ob eine Empfangsbedingung der Empfangssignal-Abgabeeinrichtung (302) zu ändern ist oder nicht, und zwar auf der Basis der Verzerrung des Übertragungskanals, wie diese von der Übertragungskanalverzerrungs-Schätzeinrichtung (308) abgeschätzt worden ist; und
- eine Steuereinrichtung (313) zum Steuern der Empfangsbedingung der Empfangssignal-Abgabeeinrichtung (302), wenn die Entscheidungseinrichtung (309) auf der Basis der Verzerrung des Empfangskanals die Entscheidung trifft, die Empfangsbedingung der Empfangssignal-Abgabeeinrichtung zu ändern,
**dadurch gekennzeichnet,**
**daß** die Übertragungskanalverzerrungs-Schätzeinrichtung (308) die Leistungseigenschaften von Teilen des Signals nach seiner Demodulation in einer Demodulationseinrichtung (305) mißt und dies zum Abschätzen der Verzerrung in dem Übertragungskanal verwendet.

2. Empfänger nach Anspruch 1,
weiterhin **gekennzeichnet durch** eine Extrahiereinrichtung (308a) zum Extrahieren einer Vielzahl von Pilotsignalen (SP), die in dem von der Empfangssignal-Abgabeeinrichtung (302) abgegebenen Empfangssignal enthalten sind, wobei die Übertragungskanalverzerrungs-Schätzeinrichtung (308) die Verzerrung des Übertragungskanals auf der Basis der Vielzahl von Pilotsignalen (SP) abschätzt, die durch die Extrahiereinrichtung (308a) extrahiert werden.

3. Empfänger nach Anspruch 2,
**dadurch gekennzeichnet,**
**daß** die Übertragungskanalverzerrungs-Schätzeinrichtung (308) die Verzerrung des Übertragungskanals auf der Basis einer Leistungsdifferenz zwischen der Vielzahl der extrahierten Pilotsignale (SP) abschätzt.

4. Empfänger nach Anspruch 2,
**dadurch gekennzeichnet,**
**daß** die Übertragungskanalverzerrungs-Schätzeinrichtung (308) die Verzerrung des Übertragungskanals auf der Basis einer Phasendifferenz zwischen der Vielzahl der Pilotsignale (SP) abschätzt.

5. Empfänger nach Anspruch 2,
**dadurch gekennzeichnet,**
**daß** die Übertragungskanalverzerrungs-Schätzeinrichtung (308) die Verzerrung des Übertragungskanals auf der Basis einer Impulsansprechdifferenz zwischen der Vielzahl der Pilotsignale (SP) abschätzt.

6. Empfänger nach einem der Ansprüche 3 bis 5,
**dadurch gekennzeichnet,**
**daß** die Entscheidungseinrichtung (309) die Entscheidung, ob die Empfangsbedingung der Empfangssignal-Abgabeeinrichtung (302) zu ändern ist oder nicht, durch Vergleichen der Leistungsdifferenz, der Phasendifferenz oder der Impulsansprechdifferenz mit einem Referenzwert trifft.

7. Empfangsverfahren, das folgende Schritte aufweist:
- einen Empfangssignal-Abgabeschritt zum Abgeben eines Empfangssignals unter Verwendung von einer oder mehreren Antennen aus einer Vielzahl von Antennen (301, 301b) für den Empfang eines Sendesignals;
- eine Übertragungskanalverzerrungs-Abschätzschritt zum Abschätzen einer Verzerrung eines Übertragungskanals auf der Basis des in dem Empfangssignal-Abgabeschritt abgegebenen Empfangssignals;
- einen Entscheidungsschritt zum Entscheiden, ob eine Empfangsbedingung des Empfangssignal-Abgabeschrittes zu ändern ist oder nicht, auf der Basis der in dem Übertragungskanalverzerrungs-Abschätzschritt abgeschätzten Verzerrung des Übertragungskanals; und
- einen Steuerschritt zum Steuern der Empfangsbedingung des Empfangssignal-Abgabeschrittes, wenn in dem Entscheidungsschritt die Entscheidung getroffen worden ist, die Empfangsbedingung des Empfangssignal-Abgabeschrittes auf der Basis der Verzerrung des Übertragungskanals zu ändern,
**dadurch gekennzeichnet,**
**daß** in dem Übertragungskanalverzerrungs-Abschätzschritt die Leistungseigenschaften von Teilen des Signals nach seiner Demodulation in einer Demodulationseinrichtung gemessen werden und dies zum Abschätzen der Verzerrung in dem Übertragungskanal verwendet wird.

8. Empfangs-Steuerprogramm zum Steuern eines Empfängers unter Verwendung eines Computers, wobei der Empfänger ein Empfangssignal unter Verwendung von einer oder mehreren Antennen aus einer Vielzahl von Antennen (301a, 301b) für den Empfang eines Sendesignals abgibt, wobei das Empfangs-Steuerprogramm den Computer veranlaßt, die Verzerrung eines Übertragungskanals auf der Basis des Empfangssignals abzuschätzen sowie das Empfangssignal auf der Basis der geschätzten Verzerrung des Übertragungskanals zu steuern,
**dadurch gekennzeichnet,**
**daß** der Übertragungskanalverzerrungs-Abschätzschritt die Leistungseigenschaften von Teilen des Signals nach seiner Demodulation mißt und dies zum Abschätzen der Verzerrung in dem Übertragungskanal verwendet.

9. Computerlesbares Speichermedium,
in dem ein Empfangs-Steuerprogramm gemäß Anspruch 8 gespeichert ist.

## Revendications

1. Récepteur comprenant:
- une pluralité d'antennes (301a, 301b) destinées à recevoir un signal d'émission;
- des moyens de sortie de signal de réception (302) destinés à sortir un signal de réception en utilisant une ou plusieurs antennes parmi la pluralité d'antennes (301a, 301b);
- des moyens d'évaluation de la distorsion dans un canal d'émission (308) destinés à évaluer la distorsion d'un canal d'émission sur la base de l'extraction du signal de réception par les moyens de sortie de signal de réception (302);
- des moyens de décision (309) destinés à prendre la décision de modifier ou non une condition de réception des moyens de sortie de signal de réception (302) sur la base de la distorsion du canal d'émission évaluée par les moyens d'évaluation de la distorsion dans un canal d'émission (308); et
- des moyens de commande (313) destinés à commander la condition de réception des moyens de sortie de signal de réception (302) si les moyens de décision (309) décident de changer la condition de réception des moyens de sortie de signal de réception sur la base de la distorsion du canal d'émission,
**caractérisé en ce que** les moyens d'évaluation de la distorsion dans un canal d'émission (308) mesurent la puissance des partie du signal après qu'il a été démodulé dans des moyens de démodulation (305), et utilisent cette mesure pour évaluer la distorsion dans le canal d'émission.

2. Récepteur selon la revendication 1,
**caractérisé en outre par** des moyens d'extraction (308a) destinés à extraire une pluralité de signaux pilotes (SP) compris dans le signal de réception sorti des moyens de sortie de signal de réception (302), dans lequel les moyens d'évaluation de la distorsion dans un canal d'émission (308) évaluent la distorsion du canal d'émission sur la base de la pluralité de signaux pilotes (SP) extraits par les moyens d'extraction (308a).

3. Récepteur selon la revendication 2,
**caractérisé en ce que** les moyens d'évaluation de la distorsion dans un canal d'émission (308) évaluent la distorsion du canal d'émission sur la base d'une différence de puissance entre la pluralité de signaux pilotes (SP) extraits.

4. Récepteur selon la revendication 2,
**caractérisé en ce que** les moyens d'évaluation de la distorsion dans un canal d'émission (308) évaluent la distorsion du canal d'émission sur la base d'une différence de phase entre la pluralité de signaux pilotes (SP).

5. Récepteur selon la revendication 2,
**caractérisé en ce que** les moyens d'évaluation de la distorsion dans un canal d'émission (308) évaluent la distorsion du canal d'émission sur la base d'une différence de réponse impulsionnelle entre la pluralité de signaux pilotes (SP).

6. Récepteur selon l'une quelconque des revendications 3 à 5,
**caractérisé en ce que** les moyens de décision (309) décident de modifier ou non la condition de réception des moyens de sortie de signal de réception (302) en comparant la différence de puissance, la différence de phase ou la différence de réponse impulsionnelle à une valeur de référence.

7. Procédé de réception comprenant :
- une étape de sortie de signal de réception consistant à sortir un signal de réception en utilisant une ou plusieurs antennes parmi une pluralité d'antennes (301a, 301b) destinées à recevoir un signal d'émission;
- une étape d'évaluation de distorsion dans un canal d'émission consistant à évaluer la distorsion d'un canal d'émission sur la base du signal de réception sorti au cours de l'étape de sortie de signal de réception;
- une étape de décision consistant à décider de modifier ou non une condition de réception de l'étape de sortie de signal de réception sur la base de la distorsion du canal d'émission évaluée au cours de l'étape d'évaluation de la distorsion dans le canal d'émission; et
- une étape de commande consistant à commander la condition de réception de l'étape de sortie de signal de réception s'il a été pris la décision au cours de l'étape de décision de modifier la condition de réception de l'étape de sortie de signal de réception sur la base de la distorsion du canal d'émission,
**caractérisé en ce que** l'étape d'évaluation de distorsion dans le canal d'émission mesure les puissances de parties du signal après qu'il a été démodulé dans des moyens de démodulation, et utilise cette mesure pour évaluer la distorsion dans le canal d'émission.

8. Programme de commande de réception destiné à commander un récepteur en utilisant un ordinateur, le récepteur sortant un signal de réception en utilisant une ou plusieurs antennes parmi une pluralité d'antennes (301a, 301b) destinées à recevoir un signal d'émission, dans lequel le programme de commande de réception fait en sorte que l'ordinateur évalue la distorsion d'un canal d'émission sur la base du signal de réception et commande le signal de réception sur la base de la distorsion du canal d'émission évaluée,
**caractérisé en ce que** l'étape d'évaluation de distorsion dans un canal d'émission mesure les puissances de parties du signal après qu'il a été démodulé, et utilise cette mesure pour évaluer la distorsion dans le canal d'émission.

9. Support de stockage, lisible par un ordinateur, stockant un programme de commande de réception tel qu'il est défini dans la revendication 8.
